# EUROPÄISCHE PATENTSCHRIFT

(11) **EP 0 505 870 B1**
(45) Veröffentlichungstag und Bekanntmachung des Hinweises auf die Patenterteilung: **24.05.1995**
(21) Anmeldenummer: 92104477.2
(22) Anmeldetag: 16.03.1992
(51) Int. Cl.: C09B 67/00

(54) **Verfahren zur Gewinnung fester Farbstoffe**
Procedure to obtain solid dyestuffs
Méthode de récupération de colorants solides

(30) Priorität: 27.03.1991 DE 4110050
(43) Veröffentlichungstag der Anmeldung: 30.09.1992
(73) Patentinhaber: BAYER AG, 51368 Leverkusen (DE)
(72) Erfinder: Baumann, Friedrich-Wilhelm, Dr., W-2211 St. Margarethen (DE); Michna, Martin, Dr., W-5024 Pulheim (DE); Stephan, Günter, Dr., W-2222 Marne (DE); Tegtmeyer, Dietrich, Dr., W-5000 Köln 80 (DE); Wolf, Karlheinz, Dr., W-5090 Leverkusen 1 (DE)

(56) Entgegenhaltungen:
- EP-A- 0 039 439
- EP-A- 0 186 836
- PATENT ABSTRACTS OF JAPAN vol. 4, no. 101 (C-19)(583) 19. Juli 1980

## Beschreibung

Die vorliegende Erfindung betrifft ein neues Verfahren zur Gewinnung fester Farbstoffe.

In der Farbstoffchemie ist es üblich, Farbstoffe aus einer Lösung abzuscheiden oder die schon vorhandene Ausfällung in einer Suspension zu vervollständigen, um den ausgefallenen Feststoff in einem anschließenden Filtrationsschritt vom Lösungsmittel abzutrennen. Dieser Verfahrensschritt ermöglicht es, unerwünschte Nebenprodukte abzutrennen. Ein weiterer Grund, eine solche Operation durchzuführen, kann z.B. auch sein, den Filterkuchen anschließend in einem kleineren Volumen wieder zu lösen oder zu dispergieren. Üblicherweise wird diese Fällung durch Zugabe von festen Salzen wie z.B. NaCl, Na₂SO₄ usw. bewirkt.

Diese zugegebenen Salze finden sich aber zum größten Teil im Filtrat wieder und führen dazu, daß die Entsorgung dieser Filtrate erschwert wird.

Aus der Verfahrenstechnik sind auch andere Möglichkeiten zur Fällung von Farbstoffen bekannt wie z.B. die Aufkonzentration durch Eindampfen oder die Temperaturerniedrigung.

Eine Ausfällung durch Abkühlen der Reaktionsmischung wird selten durchgeführt, da die Farbstoffe häufig bei tiefen Temperaturen in einer Form anfallen, die sehr schlecht filtrierbar ist.

Die Eindampfung, insbesondere die vollständige Eindampfung durch Sprühtrocknung wird technisch in großem Umfang genutzt (vgl. J. Soc. Dyers Colour. 104, 2 (1988) 79-85), obwohl sie die Nachteile aufweist, daß sie sehr viel Energie verbraucht und stärker verunreinigte Farbstoffe als die Filtration liefert, da alle Nebenprodukte aus den vorhergehenden Syntheseschritten in das Endprodukt übergehen. Eine teilweise Eindampfung und anschließende Filtration könnte technisch zwar durchgeführt werden, hat aber den Nachteil, daß sie nahezu ebensoviel Energie verbraucht wie die Sprühtrocknung und dabei nicht die Möglichkeit bietet den Vorgang zu automatisieren.

Die vorliegende Erfindung betrifft ein Vorfahren zur Gewinnung von festen Farbstoffen aus wäßrigen Farbstofflösungen oder -suspensionen, dadurch gekennzeichnet, daß der Farbstoff aus der wäßrigen Farbstofflösung oder -suspension durch Aufkonzentration dieser Lösung in einem Druckpermeationsprozeß an einer semipermeablen Membran ausgefällt, und in einer anschließenden fest/flüssig Trennung vom dem Konzentrat abgetrennt wird.

Nach der fest/flüssig Trennung erhält man Farbstoffe mit einem Wassergehalt von beispielsweise 30-90 Gew.-%. In dieser Form wird der Farbstoff als Paste bezeichnet.

Das erfindungsgemäße Verfahren liefert Farbstoffpasten mit einem geringen Salzgehalt von beispielsweise 1-20 Gew.-%.

Durch das erfindungsgemäße Verfahren können also sehr salzarme Farbstoffpasten erhalten werden, die sich hervorragend zur Herstellung besonders konzentrierter Farbstoffpulver und Granulate sowie zur vereinfachten Herstellung hochkonzentrierter Flüssigmarken eignen.

In bestimmten Fällen kann es sich als günstig erweisen, während oder nach der Aufkonzentration dem Konzentrat Salze zuzusetzen, um die Fällung einzuleiten oder zu vervollständigen. Die erforderliche Salzmenge ist dabei jedoch wesentlich geringer als die ohne Aufkonzentration benötigte Menge.

Als Fällsalze kommen wasserlösliche, anorganische Salze wie z.B. Natriumchlorid, Kaliumchlorid, Magnesiumchlorid, Natriumsulfat, Kaliumsulfat und Magnesiumsulfat in Frage.

Der Grad der Aufkonzentration und die Menge der zugegebenen Salze werden so bemessen, daß einerseits nur ein Minimum an Salz verwendet werden muß und andererseits die Fällung des Farbstoffs möglichst vollständig wird.

Die Aufkonzentration der Farbstofflösungen erfolgt erfindungsgemäß durch Druckpermeation an Membranen, insbesondere durch Reversosmose, Ultra- oder Nanofiltration oder durch Kombination aus zwei oder mehreren dieser Methoden.

Bei der Reversosmose werden Membranen eingesetzt, die nur für Wassermoleküle durchlässig sind, Salze jedoch zurückhalten.

Die Ultrafiltration wird mit Membranen betrieben, die für Moleküle mit einem Molekulargewicht unter ca. 20 000, vorzugsweise jedoch unterhalb 1 000 Dalton sowie für anorganische Salze durchlässig sind.

Für die Nanofiltration verwendbare Membranen sind für Moleküle mit einem Molekulargewicht unter 1 000 Dalton, vorzugsweise unter ca. 150 Dalton sowie für einwertige Ionen durchlässig; höherwertige Ionen werden von diesen Membranen weitgehend zurückgehalten.

Dazu können prinzipiell symmetrische, asymmetrische, und Compositemembranen mit semipermeablen Eigenschaften Verwendung finden. Sie können sowohl aus organischen, als auch aus anorganischen Materialien bestehen.

Organische Materialien sind bevorzugt: Polyvinylidenfluorid, Celluloseacetat, Polytetrafluorethen, Polyacrylnitril, Polyethylenimin, Copolymerisate aus Polyacrylnitril und Vinylpyrrolidon, Polysulfon, Polyamid oder auch hydrophilierte Polyolefine, z.B. auf Basis von Polypropylen. Ebenfalls geeignet sind physikochemisch oder chemisch modifizierte Membranen wie z.B. modifizierte Polyacrylnitrilmembranen (vgl. z.B. EP-A-25 973), die beispielsweise erhalten werden durch Umsetzung des Basispolymers mit Hydroxylamin, einer polyfunktionellen, niedermolekularen Verbindung, einem reaktive Gruppen enthaltenden Polymer und einer ionischen Verbindung, die mit dem Polymer eine chemische Bindung eingehen kann, und anschließend mit Aktivchlor, z.B. in Form einer Hypochloritlösung behandelt wird.

Anorganische Membranen sind solche aus porösem Metall bzw. Metallegierungen - (sogenannte Metallsintermembranen z.B. aus porösem Stahl) oder solche aus porösem Kohlenstoff, deren Oberfläche z.B. mit einer dünnen Schicht aus Zirkondioxid, Silicium- oder Aluminiumoxid belegt sein kann, oder weiterhin solche aus porösem Glas oder Keramik.

Vorzugsweise werden zur Durchführung des erfindungsgemäßen Verfahrens die Lösungen einer Druckpermation an asymmetrischen Membranen oder Compositemembranen, die gegebenenfalls mit ionischen Gruppen modifiziert sind, unterworfen, wobei, abhängig von der jeweiligen Porengröße der verwendeten Membran, salzhaltiges oder salzfreies Permeat ausgeschleust wird.

Zur Aufkonzentration nach dem erfindungsgemäßen Verfahren können alle handelsüblichen Druckpermeationsanlagen verwendet werden. Wenn der Farbstoff schon teilweise ausgefallen ist oder während der Aufkonzentration ausfällt, muß die Anlage lediglich zur Druckpermeation von Suspensionen geeignet sein. Solche Geräte können z.B. als Platten-, Rahmen-, Rohr-, Schlauch-, Wickel-, Hohlfaser oder Hohlfeinfasermodul ausgebildet sein, in die die oben beschriebenen Membranen eingebaut werden können.

Normalerweise wird man das ausgeschleuste Permeat nicht durch entsalztes Wasser ersetzen. Wenn jedoch unerwünschte Reaktionssalze oder unerwünschte, die Membran passierende Nebenprodukte entfernt werden sollen, so kann die Farbstofflösung oder -suspension gegebenenfalls zusätzlich zur Aufkonzentration durch Zugabe von entmineralisiertem Wasser entsalzt werden.

Die nach der Aufkonzentration erhaltene Farbstoffsuspension oder -lösung kann entweder direkt bzw. nach Zugabe von Fällsalzen filtriert werden.

Geeignete Filtrationsanlagen sind z.B. Filterpressen, Membranfilterpressen, Drucknutschen, Bandfiltern und Drehfiltern. Ebenso können auch andere technische Einrichtungen zur fest/flüssig Trennung wie z.B. Zentrifugen verwendet werden.

Die Filtration kann chargenweise oder auch kontinuierlich unmittelbar nach der Aufkonzentration ohne Zwischenspeicherung erfolgen. Eine Farbstofflösung kann gegegebenenfalls vor der Aufkonzentration geklärt werden, beispielsweise durch eine vorgeschaltete Mikrofiltration.

Für die Durchführung des erfindungsgemäßen Verfahrens eignen sich wasserlösliche anionische, kationische oder basische Farbstoffe aus der Reihe der metallfreien oder metallhaltigen Mono- oder Polyazofarbstoffe, metallfreien oder metallhaltigen Azaporphinfarbstoffe, wie Kupfer-, Kobalt- oder Nickelphthalocyaninfarbstoffe der Anthrachinon-, Oxazin-, Dioxazin-, Triphenylmethan-, Nitro-, Azomethin-, metallfreien oder metallhaltigen Formazanfarbstoffe.

Die Farbstoffe können gegebenenfalls eine faserreaktive Gruppe tragen. Geeignete Reaktivgruppen sind z.B. solche, die mindestens einen abspaltbaren Substituenten an einen heterocyclischen Rest gebunden enthalten, unter anderem solche, die mindestens einen reaktiven Substituenten an einen 5- oder 6-gliedrigen heterocyclischen Ring gebunden enthalten, wie an einem Monazin-, Diazin-, Triazin-, z.B. Pyridin-, Pyrimidin-, Pyridazin-, Thiazin-, Oxazin- oder asymmetrischen oder symmetrischen Triazinring oder an ein derartiges Ringsystem, welches einen oder mehrere ankondensierte Ringe aufweist, wie ein Chinolin-, Phthalazin-, Cinnolin-, Chinazolin-, Chinoxalin-, Acridin-, Phenazin- und Phenanthridin-Ringsystem; die 5- oder 6-gliedrigen heterocyclischen Ringe, welche mindestens einen reaktiven Substituenten aufweisen, sind demnach bevorzugt solche, die ein oder mehrere Stickstoffatome enthalten und 5- oder bevorzugt 6-gliedrige carbocyclische Ringe ankondensiert enthalten können.

Unter den reaktiven Substituenten am Heterocyclus sind beispielsweise zu erwähnen: Halogen (Cl, Br oder F), Azido (N₃), Rhodanido, Thio, Thioether und Oxyether.

Bevorzugt sind im Fall der vorliegenden Erfindung Reaktivfarbstoffe mit Reaktivgruppen auf Basis folgender Systeme: Mono- oder Dihalogen-symmetrische Triazinylreste, Mono-, Di- oder Trihalogenpyrimidinylreste oder halogen-substituierte Chinoxylinylcarbonylreste.

Insbesondere bevorzugt sind folgende Reaktivgruppen der Formeln (1), (2) und (3) 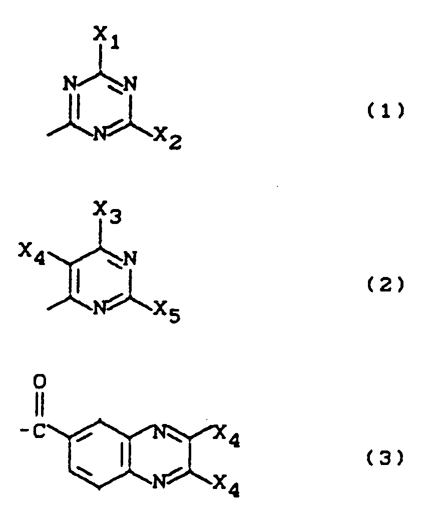
wobei in den Formeln (1), (2) und (3) gilt:
- X₁: = F
- X₂: = Cl, F, NH₂, NHR², N(R₂)², OR², CH₂R², SR², N (CH₂)n, 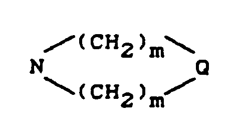
- n: = 4, 5, 6
- m: = 2, 3
- Q: = 〉NH, NR², O, S
- X₃: = Cl, F, CH₃
- X₄: = Cl, F
- X₅: = Cl, F, H
und wobei
- R²: H oder Alkyl (insbesondere gegebenenfalls durch OH, SO₃H oder COOH substituiertes C₁-C₄-Alkyl), Aryl (insbesondere gegebenenfalls durch SO₃H, C₁-C₄-Alkyl, C₁-C₄-Alkoxy substituiertes Phenyl, Aralkyl (insbesondere gegebenenfalls durch SO₃H, C₁-C₄-Alkyl, C₁-C₄-Alkoxy substituiertes Benzyl).

Weitere geeignete faserreaktive Gruppen sind beispielsweise solche mit der Formel (4)

-SO₂-CH₂-CH₂-Z (4)

wobei
Z für Cl, Br, OSO₃H, SSO₃H, 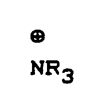
steht,
und
R für gegebenenfalls substituiertes C₁-C₄-Alkyl steht.

Die Reaktivfarbstoffe können im Molekül eine oder mehrere gleiche oder verschiedene Reaktivgruppen tragen.

Es lassen sich jedoch auch Farbstoffe mit anderen Fixierprinzipien wie z.B. Substantivfarbstoffe, saure Farbstoffe, Nachchromierfarbstoffe und andere nach dem erfindungsgemäßen Verfahren isolieren.

Das erfindungsgemäße Verfahren dient zwar in erster Linie der Herstellung fester Formierungen, jedoch können ausgehend von den Pasten und Pulvern gegebenenfalls auch hochkonzentrierte flüssige Formierungen hergestellt werden.

Die nach dem erfindungsgemäßen Verfahren gewonnenen Farbstoffe, die gegebenenfalls auch als wasserhaltige Pasten anfallen können, können nach den verschiedensten Verfahren zu Handelsprodukten weiterverarbeitet werden. Sie können in den verschiedensten Trocknungsaggregaten in Pulver überführt werden wie z.B. Umluftschrank, Schaufeltrockner, Vakuumtrockenschrank oder Walzentrockner. Die Farbstoffpasten können aber auch mit Wasser angerührt und durch Sprühtrocknung mit einer Ein- oder Zweistoffdüse in Pulver überführt werden.

Die trockenen Pulver können mit geeigneten wasserlöslichen Einstellmitteln durch Vermischen auf einen festgelegten Farbstoffgehalt eingestellt werden. Gegebenenfalls kann diese Einstellung auch vor der Trocknung erfolgen.

Als übliche Einstellmittel kommen feste Verbindungen in Frage, die keine Reaktion mit der Reaktivgruppe eingehen wie z.B. anorganische Salze, besonders bevorzugt LiCl, Li₂SO₄ oder Polyphosphate, vorzugsweise aber Nichtelektrolyte wie Polyvinylpyrrolidon, Harnstoff, Salze von wasserlöslichen aromatischen Sulfosäuren wie Benzolsulfonsäure und anionische Dispergiermittel wie sulfatierte primäre oder sekundäre aliphatische Alkohole mit 10 bis 18 Kohlenstoffatomen, sulfatierte Fettsäureamide, sulfatierte Alkylenoxidaddukte, sulfatierte partiell veresterte mehrwertige Alkohole und vor allem Sulfonate, wie langkettige Alkylsulfonate, beispielsweise Laurylsulfonat, Cetylsulfonat, Stearylsulfonat, Mersolate, Natriumdialkylsulfosuccinate, wie Natriumdioctylsulfosuccinat, Tauride wie beispielsweise Oleylmethyltaurid (Natriumsalz), Alkylarylsulfonate, wie Alkylbenzolsulfonate mit gradkettiger oder verzweigter Alkylkette mit 7 bis 20 Kohlenstoffatomen, und Mono- und Dialkylnaphthalinsulfonate, wie Nonylbenzolsulfonat, Dodecylbenzolsulfonat und Hexadecylbenzolsulfonat, sowie 1-Isopropylnaphthalin-2-sulfonat, Di-iso-propylnaphthalinsulfonat, Di-n-butyl-naphthalinsulfonat, Diisobutylnaphthalinsulfonat und insbesondere Kondensationsprodukte aus aromatischen Sulfonsäuren und Formaldehyd wie Naphthalinsulfonsäure, Ditolylethersulfonsäuren oder Terphenylsulfonsäuren mit Formaldehyd und/oder Kondensationsprodukte aus Cyclohexanon, Formaldehyd und Bisulfit und/oder Ligninsulfonate. Weiterhin können noch übliche Entstaubungsmittel wie Öle, Öl/Emulgator-Mischungen oder Phthalsäureester zugesetzt werden.

Zusammen mit den Einstellmitteln können im Fall von Reaktivfarbstoffen noch geeignete Puffersubstanzen wie Phosphate, Polyphosphate, Borsäure und andere zugesetzt werden.

Die erhaltenen Farbstoffpulver können anschließend mit den bekannten Methoden granuliert werden wie zum Beispiel Teller-, Trommel-, Wirbelschicht-, Schmelz- und Brikettgranulation.

### Beispiele

### Beispiel 1

100 kg Reaktionssuspension des Farbstoffs der Formel 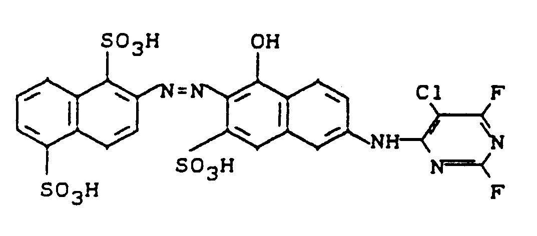
enthält neben Prozeßsalzen wie NaCl und NaF 5,71 % des Farbstoffs mit obiger Formel und 0,33 % Nebenprodukte. Sie wird bei einer Temperatur von ca, 40°C, einem pH von 7,5 und einem Druck von 30 bar durch Entfernen von 54 kg salzhaltigem Permeat aufkonzentriert. Anschließend wird die Suspension entsalzt. Hierbei werden 18 kg salzhaltiges Permeat kontinuierlich durch 18 kg entmineralisiertes Wasser ersetzt und anschließend durch Entfernen von 20,7 kg salzhaltigem Permeat weiter aufkonzentriert. Als Membran wird eine handelsübliche Composite-Membran (Trägerschicht: Polysulfon, Membranschicht: Polyamid) verwendet.

25,3 kg konzentrierte Suspension mit 22,6 % des Farbstoffs obiger Formel und 1,3 % Nebenprodukt werden nach Aussalzen mit 5,06 kg NaCl bei Raumtemperatur über eine Presse isoliert. Man erhält 10,2 kg Preßkuchen mit einem Gehalt an Farbstoff obiger Formel von 53,5 % und einem Gehalt an Nebenprodukten von 0,4 %.

Der Preßkuchen wird durch übliche Trocknungsmethoden getrocknet und mit Einstellmitteln und Puffersubstanzen zu einer typkonformen Handelsware eingestellt.

Durch die konzentrierte Isolierung in diesem Beispiel wird das in einer Abwasserverbrennungsanlage zu entsorgende Abwasser um ca. 80 % und die Kochsalzmenge um ca, 75 % gegenüber dem herkömmlichen Verfahren reduziert.

Die bei der Färbung störenden Nebenprodukte konnten um etwa 85 % reduziert werden.

### Beispiel 2

100 kg Reaktionssuspension des Farbstoffs der Formel 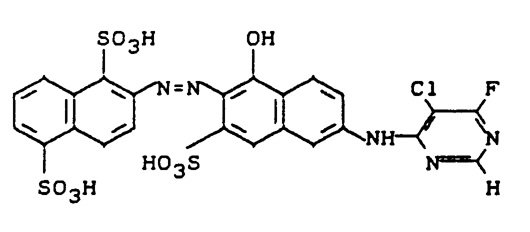
enthält neben Prozeßsalzen wie NaCl und NaF 5,49 % des Farbstoffs mit obiger Formel und 0,52 % Nebenprodukte. Sie wird bei einer Temperatur von ca, 45° C, einem pH von 7,5 und einem Druck von 30 bar durch Entfernen von 77 kg salzhaltigem Permeat aufkonzentriert. Als Membran wird eine handelsübliche Composite-Membran (Trägerschicht: Polysulfon, Membranschicht: Polyamid) verwendet.

23 kg konzentrierte Suspension mit 23,5 % des Farbstoffs obiger Formel und 2,2 % Nebenprodukten wird bei ca, 40°C über eine Presse isoliert, Man erhält 11,6 kg Preßkuchen mit einem Gehalt an Farbstoff obiger Formel von 46,9 % und einem Gehalt an Nebenprodukten von 0,8 %.

Der Preßkuchen wird in verdünnter LiHCO₃-Lösung gelöst, mittels Druckpermeation entsalzt und aufkonzentriert Die entstandene konzentrierte Farbstofflösung ergibt nach Einstellen mit Lösevermittler und Puffersubstanzen eine typkonforme Flüssigeinstellung, die von -20°C bis 50°C lagerstabil ist.

Durch die konzentrierte Isolierung in diesem Beispiel wird das in einer Abwasserverbrennungsanlage zu entsorgende Abwasser um ca. 77 % und die Kochsalzmenge um 100 % gegenüber den herkömmlichen Verfahren reduziert.

Die bei der Färbung störenden Nebenprodukte konnten um ca. 85 % vermindert werden.

### Beispiel 3

100 kg Reaktionslösung des Farbstoffs der Formel 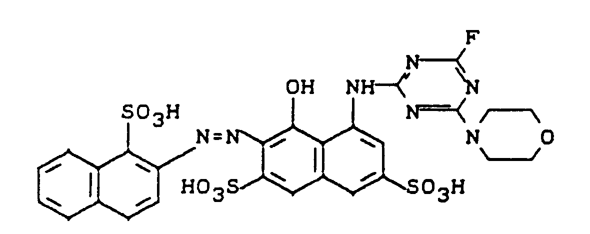
enthält neben Prozeßsalzen wie NaCl und NaF 3,6 % des Farbstoffs mit obiger Formel und 0,8 % Nebenprodukte. Sie wird bei einem pH von 8,0, einer Temperatur von 25°C und einem Druck von 30 bar durch Entfernen von 75,1 kg salzhaltigem Permeat aufkonzentriert, Während der Aufkonzentrierung entsteht eine Suspension.

Als Membran wird eine handelsübliche Composite-Membran (Trägerschicht: Polysulfon, Membranschicht: Polyamid) verwendet.

24,9 kg konzentrierte Suspension mit 14,4 % des Farbstoffs obiger Formel und 3,2 % Nebenprodukten werden nach Aussalzen mit ca. 5 kg NaCl bei 70°C über eine Presse isoliert.

Man erhält 7,2 kg Preßkuchen mit einem Gehalt an Farbstoff obiger Formel von 43,1 % und einem Gehalt an Nebenprodukten von 1,3 %.

Der Preßkuchen wird durch übliche Trocknungsmethoden getrocknet und mit Einstellmitteln und Puffersubstanzen zu einer typkonformen Handelsware eingestellt. Durch die konzentrierte Isolierung in diesem Beispiel wird das in einer Abwasserverbrennungsanlage zu entsorgende Abwasser um ca. 80 % und die Kochsalzmenge zum Aussalzen um ca. 75 % gegenüber dem herkömmlichen Verfahren reduziert.

Die bei der Färbung störenden Nebenprodukte konnten um etwa 88 % vermindert werden.

### Beispiel 4

100 kg Reaktionssuspension des Farbstoffs der Formel 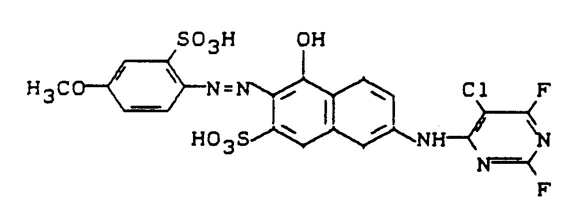
enthält neben Prozeßsalzen wie NaCl und NaF 4,94 % des Farbstoffs mit obiger Formel und 0,25 % Nebenprodukte. Durch Zugabe von 25 kg entmineralisiertem Wasser wird die Suspension bei 45° C gelöst. Bei dieser Temperatur, einem pH von 7.5 und einem Druck von 30 bar konzentriert man durch Entfernen von 60 kg salzhaltigem Permeat auf.

Als Membran wird eine handelsübliche Membran (Trägerschicht: Polysulfon, Membranschicht: Polyamid) verwendet.

65 kg konzentrierte Suspension mit 7,6 % des Farbstoffs obiger Formel und 0,38 % Nebenprodukte werden nach Aussalzen mit 3,25 kg NaCl bei 30°C über eine Presse isoliert.

Man erhält 10,5 kg Preßkuchen mit einem Gehalt an Farbstoff obiger Formel von 46,1 % und einem Gehalt an Nebenprodukten von 0,19 %. Der Preßkuchen wird durch übliche Trocknungsmethoden getrocknet und mit Einstellmitteln sowie Puffersubstanzen zu einer typkonformen Handelsware eingestellt.

Durch die konzentrierte Isolierung in diesem Beispiel wird das in einer Abwasserverbrennungsanlage zu entsorgende Abwasser um ca. 40 % und die Kochsalzmenge um ca. 50 % gegenüber den herkömmlichen Verfahren reduziert.

Die bei der Färbung störenden Nebenprodukte konnten um etwa 90 % reduziert werden.

### Beispiel 5

100 kg Reaktionslösung des Farbstoffs der Formel 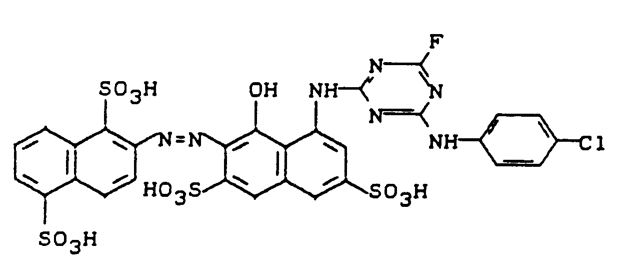
enthält neben Prozeßsalzen wie NaCl und NaF 5,91 % des Farbstoffs obiger Formel und 0,56 % Nebenprodukt. Sie wird bei einem pH von 8,0, einer Temperatur von 30°C und einem Druck von 30 bar durch Entfernen von 58 kg salzhaltigem Permeat aufkonzentriert.

Als Membran wird eine handelsübliche Composite-Membran (Trägerschicht: Polysulfon, Membranschicht: Polyamid) verwendet.

42 kg konzentrierte Suspension mit 14,1 % des Farbstoffs obiger Formel und 1,3 % Nebenprodukten werden nach Aussalzen mit 6,3 kg NaCl bei 30°C über eine Presse isoliert.

Man erhält 10,8 kg Preßkuchen mit einem Gehalt an Farbstoff obiger Formel von 53,5 % und einem Gehalt an Nebenprodukten von 0,74 %.

Der Preßkuchen wird durch übliche Trocknungsmethode getrocknet und mit Stellmitteln sowie Puffersubstanzen zu einer typkonformen Handelsware formiert.

Durch die konzentrierte Isolierung in diesem Beispiel wird das in einer Abwasserverbrennungsanlage zu entsorgende Abwasser um ca. 66 % und die Kochsalzmenge zum Aussalzen um ca. 58 % gegenüber den herkömmlichen Verfahren reduziert.

Die bei der Färbung störenden Nebenprodukte konnten um etwa 85 % vermindert werden.

### Beispiel 6

100 kg Reaktionssuspension des Farbstoffs der Formel 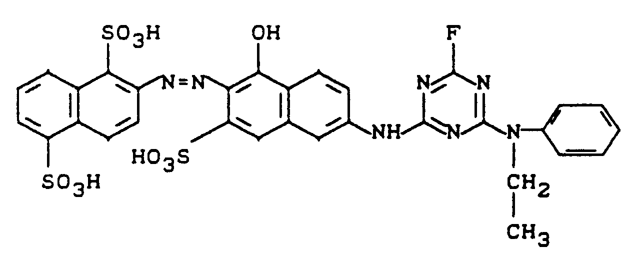
enthält neben Prozeßsalzen wie NaCl und NaF 5,75 % des Farbstoffs obiger Formel und 0,67 % Nebenprodukte. Sie wird bei einem pH von 7,5, einer Temperatur von 25°C und einem Druck von 30 bar durch Entfernen von 72 kg salzhaltigem Permeat aufkonzentriert. Als Membran wird eine handelsübliche Composite-Membran (Trägerschicht: Polysulfon, Membranschicht: Polyamid) verwendet.

28 kg konzentrierte Suspension mit 20,5 % des Farbstoffs obiger Formel und 2,4 % Nebenprodukten werden nach Aussalzen mit 5,6 kg NaCl bei 25°C über eine Presse isoliert.

Man erhält 10,6 kg Preßkuchen mit einem Gehalt an Farbstoff obiger Formel von 53,7 % und einem Gehalt an Nebenprodukten von 0,9 %. Der Preßkuchen wird durch übliche Trocknungsmethoden getrocknet und mit Stellmitteln sowie Puffersubstanzen in einer typkonformen Handelsware formiert.

Durch die konzentrierte Isolierung in diesem Beispiel wird das in einer Verbrennungsanlage zu entsorgende Abwasser um ca. 79 % und die Kochsalzmenge zum Aussalzen um ca, 72 % gegenüber den herkömmlichen Verfahren reduziert.

Die bei der Färbung störenden Nebenprodukte konnten um etwa 85 % vermindert werden.

### Beispiel 7

100 kg Reaktionslösung des Farbstoffs der Formel 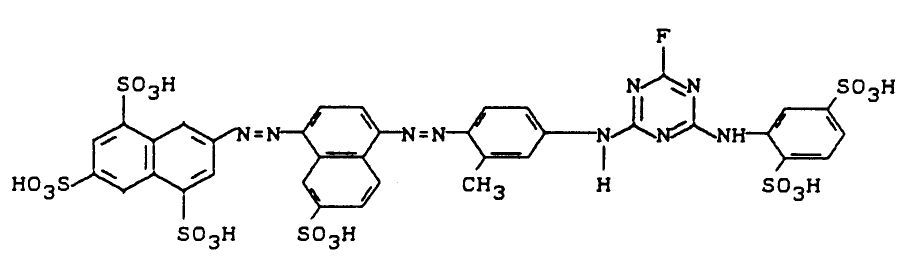
enthält neben Prozeßsalzen wie NaCl und NaF 4,26 % des Farbstoffs obiger Formel und 0,10 % Nebenprodukt. Sie wird bei einem pH von 8,0, einer Temperatur von 30°C und einem Druck von 30 bar durch Entfernen von 58 kg salzhaltigem Permeat aufkonzentriert.

Als Membran wird eine handelsübliche Composite-Membran (Trägerschicht: Polysulfon, Membranschicht: Polyamid) verwendet.

42 kg konzentrierte Suspension mit 10,1 % des Farbstoffs obiger Formel und 0,24 % Nebenprodukte werden nach Aussalzen mit 8,4 kg NaCl bei 30°C über eine Presse isoliert.

Man erhält 12,1 kg Preßkuchen mit einem Gehalt an Farbstoff obiger Formel von 34,5 % und einem Gehalt an Nebenprodukten von 0,13 %. Der Preßkuchen wird durch übliche Trocknungsmethoden getrocknet und mit Stellmitteln sowie Puffersubstanzen zu einer typkonformen Handelsware formiert.

Durch die konzentrierte Isolierung in diesem Beispiel wird das in einer Abwasserverbrennungsanlage zu entsorgende Abwasser um ca. 65 % und die Kochsalzmenge zum Aussalzen um ca. 58 % gegenüber den herkömmlichen Verfahren reduziert.

Die bei der Färbung störenden Nebenprodukte konnten um etwa 85 % vermindert werden.

### Beispiel 8

100 kg Reaktionslösung des Farbstoffs der Formel 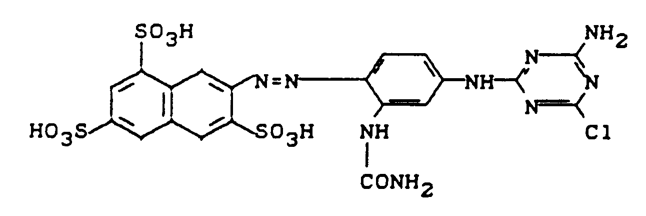
enthält neben Prozeßsalzen wie NaCl und NaF 12,5 % des Farbstoffe obiger Formel und 1,25 % Nebenprodukt. Sie wird bei einem pH von 9,0, einer Temperatur von 40°C und einem Druck von 30 bar durch Entfernen von 45 kg salzhaltigem Permeat aufkonzentriert.

Als Membran wird eine handelsübliche Composite-Membran (Trägerschicht: Polysulfon, Membranschicht; Polyamid) verwendet.

55 kg konzentrierte Suspension mit 22,7 % des Farbstoffs obiger Formel und 2,3 % Nebenprodukte werden bei 40°C über eine Presse isoliert.

Man erhält 26 kg Preßkuchen mit einem Gehalt an Farbstoff obiger Formel von 46,2 % und einem Gehalt an Nebenprodukten von 1,0 %. Der Preßkuchen wird durch übliche Trocknungsmethoden getrocknet und mit Stellmitteln sowie Puffersubstanzen zu einer typkonformen Handelsware formiert.

Durch die konzentrierte Isolierung in diesem Beispiel wird das in einer Abwasserverbrennungsanlage zu entsorgende Abwasser um ca. 60 % und die Kochsalzmenge zum Aussalzen um 100 % gegenüber den herkömmlichen Verfahren reduziert.

Die bei der Färbung störenden Nebenprodukte konnten um etwa 80 % vermindert werden.

### Beispiel 9

100 kg Reaktionslösung des Farbstoffs der Formel 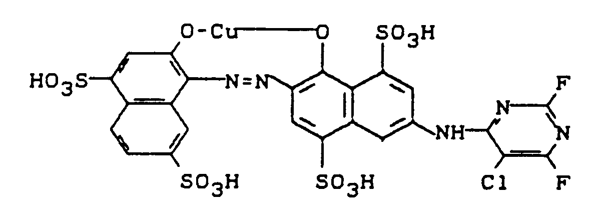
enthält neben Prozeßsalzen wie NaCl und NaF 4,55 % des Farbstoffs obiger Formel und 0,15 % Nebenprodukt. Sie wird bei einem pH von 8,0, einer Temperatur von 30°C und einem Druck von 30 bar durch Entfernen von 62 kg salzhaltigem Permeat aufkonzentriert.

Als Membran wird eine handelsübliche Composite-Membran (Trägerschicht: Polysulfon, Membranschicht: Polyamid) verwendet.

38 kg konzentrierte Suspension mit 12,0 % des Farbstoffs obiger Formel und 0,39 % Nebenprodukte werden bei 5°C über eine Presse isoliert.

Man erhält 13 kg Preßkuchen mit einem Gehalt an Farbstoff obiger Formel von 33,1 % und einem Gehalt an Nebenprodukten von 0,26 %. Der Preßkuchen wird durch übliche Trocknungsmethoden getrocknet und mit Stellmitteln sowie Puffersubstanzen zu einer typkonformen Handelsware formiert.

Durch die konzentrierte Isolierung in diesem Beispiel wird das in einer Abwasserverbrennungsanlage zu entsorgende Abwasser um ca. 70 % und die Kochsalzmenge zum Aussalzen um 100 % gegenüber den herkömmlichen Verfahren reduziert.

Die bei der Färbung störenden Nebenprodukte konnten um etwa 75 % vermindert werden.

## Patentansprüche

1. Verfahren zur Gewinnung von festen Farbstoffen aus wäßrigen Farbstofflösungen oder -suspensionen, dadurch gekennzeichnet, daß der Farbstoff aus der wäßrigen Farbstofflösung oder -suspension durch Aufkonzentration dieser Lösung in einem Druckpermeationsprozeß an einer semipermeablen Membran ausgefällt und in einer anschließenden fest/flüssig Trennung vom Konzentrat abgetrennt wird.

2. Verfahren nach Anspruch 1, dadurch gekennzeichnet, daß nach der Aufkonzentration Salze zum Konzentrat gegeben werden, um die Fällung einzuleiten oder zu vervollständigen.

3. Verfahren nach Ansprüchen 1 und 2, dadurch gekennzeichnet, daß der ausgefallene Farbstoff durch Filtration vom Konzentrat abgetrennt wird.

4. Verfahren nach Ansprüchen 1 bis 3, dadurch gekennzeichnet, daß es sich bei dem Druckpermeationsprozeß um Reversosmose, Ultra- oder Nanofiltration oder um eine Kombination aus zwei oder mehreren dieser Methoden handelt.

5. Verfahren nach Ansprüchen 1 bis 4, dadurch gekennzeichnet, daß asymetrische Membranen oder Compositemembranen, die gegebenenfalls mit ionischen Gruppen modifiziert sind, verwendet werden.

6. Verfahren nach Ansprüchen 1 bis 5, dadurch gekennzeichnet, daß es sich bei den Farbstoffen um Reaktivfarbstoffe handelt.

7. Verwendung der nach Verfahren gemäß Ansprüchen 1 bis 6 erhaltenen Farbstoffe zur Herstellung von Pulvern oder Granulaten.

8. Verwendung der nach Verfahren gemäß Ansprüchen 1 bis 6 erhaltenen Farbstoffe zur Herstellung von flüssigen Formierungen.

## Claims

1. Process for the production of solid dyestuffs from aqueous dyestuff solutions or suspensions, characterised in that the dyestuff is precipitated from the aqueous dyestuff solution or suspension by concentrating this solution in a pressure permeation process using a semi-permeable membrane, and separated off from the concentrate in a subsequent solid-liquid separation.

2. Process according to Claim 1, characterised in that after concentrating salts are added to the concentrate in order to initiate or complete precipitation.

3. Process according to Claims 1 and 2, characterised in that the precipitated dyestuff is separated off from the concentrate by filtration.

4. Process according to Claims 1 to 3, characterised in that the pressure permeation process is reverse osmosis, ultra- or nanofiltration or a combination of two or more of these methods.

5. Process according to Claims 1 to 4, characterised in that unsymmetrical membranes or composite membranes which are unmodified or modified by ionic groups are used.

6. Process according to Claims 1 to 5, characterised in that the dyestuffs are reactive dyestuffs.

7. Use of the dyestuffs obtained by the process according to Claims 1 to 6 for the preparation of powders or granules.

8. Use of the dyestuffs obtained by the process according to Claims 1 to 6 for the preparation of liquid formulations.

## Revendications

1. Procédé pour isoler des colorants solides de leurs solutions ou suspensions aqueuses, caractérisé en ce que l'on précipite le colorant de sa solution ou suspension aqueuse par concentration de cette solution dans une opération de perméation sous pression sur une membrane semi-perméable, suivie d'une séparation solide/liquide du concentré.

2. Procédé selon la revendication 1, caractérisé en ce que, après la concentration, on ajoute au concentré des sels afin de provoquer ou de compléter la précipitation.

3. Procédé selon les revendications 1 et 2, caractérisé en ce que l'on sépare le colorant qui a précipité par filtration du concentré.

4. Procédé selon les revendications 1 à 3, caractérisé en ce que l'opération de perméation sous pression consiste en une osmose inverse, une ultra-ou nano-filtration ou une combinaison de deux ou plusieurs de ces opérations.

5. Procédé selon les revendications 1 à 4, caractérisé en ce que l'on utilise des membranes asymétriques ou des membranes composites éventuellement modifiées par des groupes ioniques.

6. Procédé selon les revendications 1 à 5, caractérisé en ce que les colorants sont des colorants réactifs.

7. Utilisation des colorants obtenus par le procédé selon les revendications 1 à 6 pour la préparation de poudres ou granulés.

8. Utilisation des colorants obtenus selon les revendications 1 à 6 pour la préparation de compositions liquides.
